(19) Europäisches Patentamt / European Patent Office / Office européen des brevets

(11) **EP 3 172 825 B1**

(12) **EUROPEAN PATENT SPECIFICATION**

(45) Date of publication and mention of the grant of the patent:
**01.03.2023 Bulletin 2023/09**

(51) International Patent Classification (IPC):
**H02M 7/797** (2006.01)     **H02J 3/26** (2006.01)
**H02J 3/18** (2006.01)

(21) Application number: **15738384.5**

(22) Date of filing: **20.07.2015**

(52) Cooperative Patent Classification (CPC):
**H02J 3/26;** H02J 3/1842; H02M 1/0025;
H02M 7/797; Y02E 40/20; Y02E 40/50

(86) International application number:
**PCT/EP2015/066574**

(87) International publication number:
**WO 2016/012411 (28.01.2016 Gazette 2016/04)**

(54) **A VOLTAGE SOURCE CONVERTER**

SPANNUNGSQUELLENWANDLER

CONVERTISSEUR DE SOURCE DE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2014 EP 14275156**

(43) Date of publication of application:
**31.05.2017 Bulletin 2017/22**

(73) Proprietor: **General Electric Technology GmbH
5400 Baden (CH)**

(72) Inventors:
• **JASIM, Omar Fadhel
Nottingham NG8 2RW (GB)**
• **CANELHAS, Andre Paulo
Stafford ST17 4SL (GB)**

(74) Representative: **Freigutpartners IP Law Firm
Hahnrainweg 4
5400 Baden (CH)**

(56) References cited:
DE-A1- 4 216 946     DE-A1-102011 084 910
DE-A1-102011 084 910

• FAZELI SEYED MAHDI ET AL: "Individual-phase decoupledcontrol of three-phase voltage source converter", IET GENERATION, TRANSMISSION&DISTRIBUTION, IET, UK, vol. 7, no. 11, 1 November 2013 (2013-11-01), pages 1219-1228, XP006044887, ISSN: 1751-8687, DOI: 10.1049/IET-GTD.2012.0417
• BARBOSA P G: "Control strategy for grid-connected DC-AC converters with load power factor correction", IEE PROCEEDINGS: GENERATION, TRANSMISSION AND DISTRIBUTION, INSTITUTION OF ELECTRICAL ENGINEERS, GB, vol. 145, no. 5, 14 September 1998 (1998-09-14), pages 487-491, XP006011187, ISSN: 1350-2360, DOI: 10.1049/IP-GTD:19982174
• FEI WANG ET AL: "Pliant Active and Reactive Power Control for Grid-Interactive Converters Under Unbalanced Voltage Dips", IEEE TRANSACTIONS ON POWER ELECTRONICS, INSTITUTE OF ELECTRICAL AND ELECTRONICS ENGINEERS, USA, vol. 26, no. 5, 1 May 2011 (2011-05-01), pages 1511-1521, XP011382807, ISSN: 0885-8993, DOI: 10.1109/TPEL.2010.2052289

- DEPENBROCK M ET AL: "A theoretical investigation of original and modified instantaneous power theory applied to four-wire systems", IEEE TRANSACTIONS ON INDUSTRY APPLICATIONS, IEEE SERVICE CENTER, PISCATAWAY, NJ, US, vol. 39, no. 4, 1 July 2003 (2003-07-01), pages 1160-1167, XP011098911, ISSN: 0093-9994, DOI: 10.1109/TIA.2003.814553
- FAZELI SEYED MAHDI ET AL: "Individual-phase decoupledcontrol of three-phase voltage source converter", IET GENERATION, TRANSMISSION&DISTRIBUTION, IET, UK, vol. 7, no. 11, 1 November 2013 (2013-11-01), pages 1219-1228, XP006044887, ISSN: 1751-8687, DOI: 10.1049/IET-GTD.2012.0417

**Description**

This invention relates to a voltage source converter. In particular, it relates to a voltage source convertor having a controller configured to determine electrical variables for independently satisfying an active and reactive power demand. The invention also relates to an electrical transmission network, such as high voltage transmission network, including said voltage source convertor.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometre of the lines and/or cables. Conversion from AC to DC thus becomes cost-effective when power needs to be transmitted over a long distance.

The conversion between AC power and DC power is also utilized in power transmission networks where it is necessary to interconnect AC electrical networks operating at different frequencies. In any such power transmission network, converters are required at each interface between AC and DC power to effect the required conversion, and one such form of converter is a voltage source converter (VSC).

DE 10 2011084910 A1 discloses a method and apparatus for feeding electric current into an electric network. Another relevant prior art document is FAZELI SEYED MAHDI ET AL, "Individual-phase decoupled control of three-phase voltage source converter", IET GENERATION, TRANSMISSION&DISTRIBUTION, IET, UK, (20131101), vol. 7, no. 11.

While the invention is defined in the independent claim 1, further aspects of the invention are defined in the dependent claims, the drawings and the following description.

According to a first example, there is provided a voltage source converter comprising:

first and second DC terminals for connection to a DC electrical network;

a plurality of single-phase limbs each connected between the first and second DC terminals and each single-phase limb including a phase element, each phase element including at least one switching element configured to interconnect a DC voltage and an AC voltage, an AC side of each phase element being connectable to a respective phase of a multi-phase AC electrical network; and

a controller configured to;

receive an active power order and a reactive power order comprising the desired amount of active power and reactive power respectively to be transferred by the convertor;

receive a measurement of the instantaneous voltage of each phase of the multi-phase AC electrical network;

determine an active and reactive phase current reference value for each single-phase limb which is independent of the or each other respective phase current reference value and which defines the current each single-phase limb is required to draw from or pass to a corresponding phase of the AC electrical network to effect the active power and reactive power exchanges with the AC electrical network defined by the active and reactive power orders;

the active phase current reference values determined based on the received active power order, the instantaneous voltage measurements and a determination of a resultant instantaneous reactive power using said active phase current reference values; and/or

the reactive phase current reference values determined based on the received reactive power order, the instantaneous voltage measurements and a determination of a resultant instantaneous active power using said reactive phase current reference values.

The ability to determine independently of one another current reference values for each phase to implement an active and reactive power order, and the ability thereby to control and alter these amounts, permits an optimum amount of energy to be transferred between the AC and DC electrical networks irrespective of the conditions under which the voltage source converter is operating, e.g. normal conditions in which the currents flowing in the single-phase limbs are essentially balanced, and fault conditions in which the currents flowing in the single-phase limbs are unbalanced. Accordingly, the active power order may be satisfied by using a set of current reference values that uses a minimum amount of energy (i.e. current). The reactive power order may be implemented likewise leading to a controller with advantageous stability during transient events.

Such functionality is particularly useful when the AC electrical network with which the voltage source converter is connected is weak, i.e. the AC electrical network has a high impedance and/or it has low inertia.

A typical high impedance AC electrical network arises within a High Voltage Direct Current (HVDC) link which terminates at a weak point that has a low short-circuit capacity. A low inertia AC electrical network is considered to have a limited number of rotating machines or no rotating machines at all. Both such weak AC electrical networks are often found in a HVDC link that is powering an island or is connected to a wind farm.

The controller is configured such that the active phase current reference values are determined based on the received active power order, the instantaneous voltage measurements and a determination of a resultant instantaneous reactive power using said active phase current reference values; and the reactive phase current reference values determined based on the received reactive power order, the instantaneous voltage measurements and a determination of a resultant instantaneous active power using said reactive phase current reference values. Determining the phase current values for each phase in this way for both the reactive and active power orders is advantageous.

The controller is configured such that the active phase current reference values are selected such that the instantaneous reactive power determined from the active phase current reference values is substantially zero. This is advantageous as, based on instantaneous power theory, the minimum active current over the phases required to satisfy the active power order is achieved when the reactive power flow produced is zero. The reactive power can be calculated and therefore, for a set of active current reference values, it can be determined when the reactive power is zero (or substantially zero) thereby resulting in the minimum amount of current to satisfy the active power order.

The controller is configured such that the active phase current reference values $I_{P_i}^*(t)$ for each phase, i, of n phases are determined in accordance with the following equation;

$$I_{P_i}^*(t) = \frac{P_{order} \cdot V_{i\_pcc}(t)}{V_{a\_pcc}(t)^2 + \cdots V_{n_{pcc}}(t)^2}$$

wherein $P_{order}$ comprises the active power order, $V_{i\_pcc}(t)$ comprises the instantaneous voltage of the phase for which the active phase current is being calculated and $V_{a\_pcc}(t)^2 + \cdots V_{n_{pcc}}(t)^2$ represents the sum of the squares of each of the instantaneous voltage measurements of the phases of the multi-phase AC electrical network. The calculation of the active current reference values in this way also advantageously maintains synchronization with the AC network.

For an AC electrical network comprising three phases; a, b, and c, the active phase current reference values $I_{P_i}^*(t)$ for each phase, where i=a, i=b and i=c, are determined in accordance with the following equation;

$$I_{p\_a}^*(t) = \frac{P_{order} \cdot V_{a\_pcc}(t)}{V_{a\_pcc}(t)^2 + V_{b\_pcc}(t)^2 + V_{c\_pcc}(t)^2}$$

$$I_{p\_b}^*(t) = \frac{P_{order} \cdot V_{b\_pcc}(t)}{V_{a\_pcc}(t)^2 + V_{b\_pcc}(t)^2 + V_{c\_pcc}(t)^2}$$

$$I_{p\_c}^*(t) = \frac{P_{order} \cdot V_{c\_pcc}(t)}{V_{a\_pcc}(t)^2 + V_{b\_pcc}(t)^2 + V_{c\_pcc}(t)^2}$$

where $P_{order}$ comprises the active power order and $V_{a\_pcc}$, $V_{b\_pcc}$ and $V_{c\_pcc}$ comprise the instantaneous voltage measurements for each of the phases.

The controller is configured such that the reactive phase current reference values are selected such that the instantaneous active power determined from the reactive phase current reference values is substantially zero. This is advantageous as, based on instantaneous power theory, the minimum reactive current over the phases required to satisfy the reactive power order is achieved when the active power flow produced is zero. The active power can be calculated and therefore, for a set of reactive current reference values for each of the phases, it can be determined when the active power is zero (or substantially zero) thereby resulting in the minimum amount of current to satisfy the reactive power order.

For an AC electrical network comprising three phases; a, b, and c, the controller is configured such that the reactive phase current reference values $I_{q_i}^*(t)$ where i=a, b or c for each phase are calculated as follows.

$$I_{q\_a}^*(t) = \sqrt{3} \cdot \frac{Q_{order} \cdot V_{bc\_pcc}(t)}{V_{ab\_pcc}(t)^2 + V_{bc\_pcc}(t)^2 + V_{ca\_pcc}(t)^2}$$

$$I_{q\_b}^*(t) = \sqrt{3}.\frac{Q_{order}.V_{ca\_pcc}(t)}{V_{ab\_pcc}(t)^2 + V_{bc\_pcc}(t)^2 + V_{ca\_pcc}(t)^2}$$

$$I_{q\_c}^*(t) = \sqrt{3}.\frac{Q_{order}.V_{ab\_pcc}(t)}{V_{ab\_pcc}(t)^2 + V_{bc\_pcc}(t)^2 + V_{ca\_pcc}(t)^2}$$

wherein $Q_{order}$ comprises the reactive power order and $V_{ab\_pcc}$, $V_{bc\_pcc}$ and $V_{ca\_pcc}$ comprise the instantaneous voltage measurements between phase a and phase b, phase b and phase c and phase c and phase a respectively.

For an AC electrical network having three phases, a, b and c, the controller is configured to determine the reactive phase current reference values $I_{q\_a\,or\,b\,or\,c}^*(t)$ for each phase are calculated as follows:

$$I_{q\_a}^*(t) = \sqrt{3}.\frac{Q_{order}.V_{bc\_pcc}(t)}{V_{ab\_pcc}(t)^2 + V_{bc\_pcc}(t)^2 + V_{ca\_pcc}(t)^2}$$

$$I_{q\_b}^*(t) = \sqrt{3}.\frac{Q_{order}.V_{ca\_pcc}(t)}{V_{ab\_pcc}(t)^2 + V_{bc\_pcc}(t)^2 + V_{ca\_pcc}(t)^2}$$

$$I_{q\_c}^*(t) = \sqrt{3}.\frac{Q_{order}.V_{ab\_pcc}(t)}{V_{ab\_pcc}(t)^2 + V_{bc\_pcc}(t)^2 + V_{ca\_pcc}(t)^2}$$

where $Q_{order}$ comprises the reactive power order and $V_{xy\_pcc}(t)$ comprises the difference between the instantaneous voltage measured of phase x and the instantaneous voltage measured of phase y, and wherein x and y represents the different phase combinations of the AC electrical network which, for a three phase network, comprise ab, be and ca.

The controller is configured to combine the active phase current reference value and the corresponding reactive phase current reference value for each single-phase limb to determine a control signal for said single-phase limb. The active and reactive current reference values for a particular phase may be summed together.

The controller is configured to, based on a determination of the harmonic content of an input voltage to the voltage source convertor, determine a harmonic current reference value for each single-phase limb, the harmonic current reference value determined independently of the or each other harmonic current reference value and which has a substantially equivalent amplitude and opposite phase to said determined harmonic content.

The controller is configured to combine the active current reference value, the reactive phase current reference value and the harmonic current reference value for each single-phase limb to determine a control signal for said single-phase limb.

The controller is configured to determine an instantaneous active current of each phase of the multi-phase AC electrical network, said controller configured to determine a difference between the determined active current reference value and the corresponding instantaneous active current measurements for each phase in the determination of a control signal for said single-phase limb.

The controller is configured to determine an instantaneous reactive current of each phase of the multi-phase AC electrical network, said controller configured to determine a difference between the determined reactive current reference value and the corresponding instantaneous reactive current measurements for each phase in the determination of a control signal for said single-phase limb.

The controller is configured to use a method of Lagrange multipliers;

a) to determine the active current reference values that satisfy the active power order and that result in a minimum reactive power; and/or
b) to determine the reactive current reference values that satisfy the reactive power order and that result in a minimum active power.

The use of Lagrange multipliers is an advantageous mathematical technique for determining the current reference values for each phase that satisfy the conditions of i) meeting the associated power order and ii) minimising the reactive power for the active current reference values and minimising the active power for the reactive current reference values. It will be appreciated that other mathematical techniques could be used to determine the set of current reference values for the phases given the conditions above.

The controller configured to receive a measurement of the instantaneous voltage and current of each phase of the multi-phase AC electrical network and use these measurements to calculate the resultant instantaneous reactive power due to the active phase current reference values. The controller is configured to receive a measurement of the instantaneous voltage and current of each phase of the multi-phase AC electrical network and use these measurements to calculate the resultant instantaneous active power due to the reactive phase current reference values.

The controller is configured to measure the instantaneous voltage of each phase of the multi-phase AC electrical network at a point of common coupling. Each single-phase limb may include at least two (or more) phase elements.

According to a second example we provide an electrical distribution network including the voltage source converter of the first aspect. The electrical distribution network may additionally include a line commutated converter. According to a third example we provide a method of operating a voltage source converter comprising first and second DC terminals for connection to a DC electrical network, a plurality of single-phase limbs each connected between the first and second DC terminals and each single-phase limb including a phase element, each phase element including at least one switching element configured to interconnect a DC voltage and an AC voltage, an AC side of each phase element being connectable to a respective phase of a multi-phase AC electrical network; the method comprising the steps of;

receiving an active power order and a reactive power order comprising the desired amount of active power and reactive power respectively to be transferred by the convertor;
receiving a measurement of the instantaneous voltage of each phase of a multi-phase AC electrical network;
determining an active and reactive phase current reference value for each single-phase limb which is independent of the or each other respective phase current reference value and which defines the current each single-phase limb is required to draw from or pass to a corresponding phase of the AC electrical network to effect the active power and reactive power exchanges with the AC electrical network defined by the active and reactive power orders; wherein the active phase current reference values determined based on the received active power order, the instantaneous voltage measurements and a determination of a resultant instantaneous reactive power using said active phase current reference values; and/or
the reactive phase current reference values determined based on the received reactive power order, the instantaneous voltage measurements and a determination of a resultant instantaneous active power using said reactive phase current reference values.

There now follows a brief description of preferred embodiments of the invention, by way of non-limiting example, with reference being made to the following figures in which:

Figure 1 shows a schematic view of a power transmission network including a voltage source converter according to a first embodiment of the invention lying between respective AC and DC electrical networks;
Figure 2 shows a schematic view of an equivalent circuit corresponding to an AC side of the power transmission network shown in Figure 1 including a controller;
Figure 3 shows a schematic view of a first embodiment of the controller; and
Figure 4 shows a schematic view of a second embodiment of the controller.

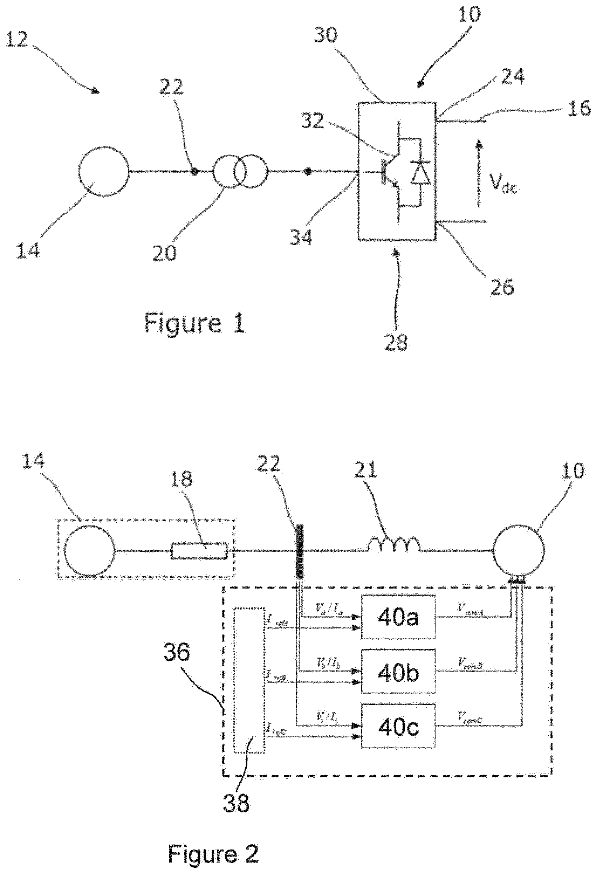

A voltage source converter according to a first embodiment of the invention is designated by reference numeral 10 and is shown in Figure 1.

The voltage source converter 10 lies within a power transmission network 12, and more particularly interconnects respective AC and DC electrical networks 14, 16. In the embodiment shown the AC electrical network 14 is a three phase a, b, c network, although AC electrical networks with fewer than or more than three phases can also be accommodated by voltage source converters according to the invention. In addition the AC electrical network is weak in the sense that it has a high equivalent impedance 18 (as shown in Figure 2).

An AC electrical network 14 may also be considered weak if it has low inertia, i.e. if it is susceptible to frequency changes, e.g. if a generator is removed from within the network 14. Such a low inertia network typically arises if there are few generators connected in either a short line or a very long line.

In any such instance, the level of active, i.e. real, power that can be exchanged with a weak AC electrical network is reduced compared to the active power that can be exchanged with a strong AC electrical network 14, i.e. an AC electrical network 14 which has a much lower equivalent impedance and / or much higher inertia. The voltage source converter 10 of the invention is, nevertheless, operable with both a weak and a strong AC electrical network 14.

In the embodiment shown the voltage source converter 10 is connected with the AC electrical network 14 by a transformer 20 which gives rise to a transformer impedance that is represented in the equivalent circuit shown in Figure 2 by an inductor 21. The voltage source converter 10 need not always be connected with the AC electrical network 14 via a transformer 20. In any event the connection between the voltage source converter 10 and the AC electrical network 14 defines a point of common coupling (PCC) 22 there between.

The voltage source converter 10 itself includes first and second DC terminals 24, 26 which in use are connected to the DC electrical network 16. The voltage source converter 10 also includes three single-phase limbs 28 (only one of which is shown schematically in Figure 1). Each single phase limb can be considered to comprise two limb portions which connect to respective ones of the first and second DC terminals 24, 26 with their other end of the limb portion connected to an AC terminal 34 for an associated phase. Each single-phase limb portion includes a phase element 30 which, in the embodiment shown, includes a single switching element 32 that is configured to interconnect a DC voltage $V_{dc}$ of the DC electrical network 16 with an AC voltage of the AC electrical network 14. More particularly an AC side 34 of each phase element 30 is in use connected to a respective phase a, b, c of the AC electrical network 14, via the transformer impedance, i.e. equivalent inductor 21, and each single-phase limb 28 is connected between the first and second DC terminals 24, 26. In other embodiments of the invention (not shown) one or more of the phase elements 30 may include more than one switching element 32, such as at least two switching elements, and in still further embodiments, one or more of the phase elements 30 may additionally include an energy storage device, e.g. in the form of a capacitor. It will be appreciated by those skilled in the art that a half bridge and/or full bridge structure may be used. Further, each limb 28 or, more particularly limb portion, may comprise at least one phase element or a plurality of phase elements forming a chain of serially connected phase elements, as will be known to those skilled in the art.

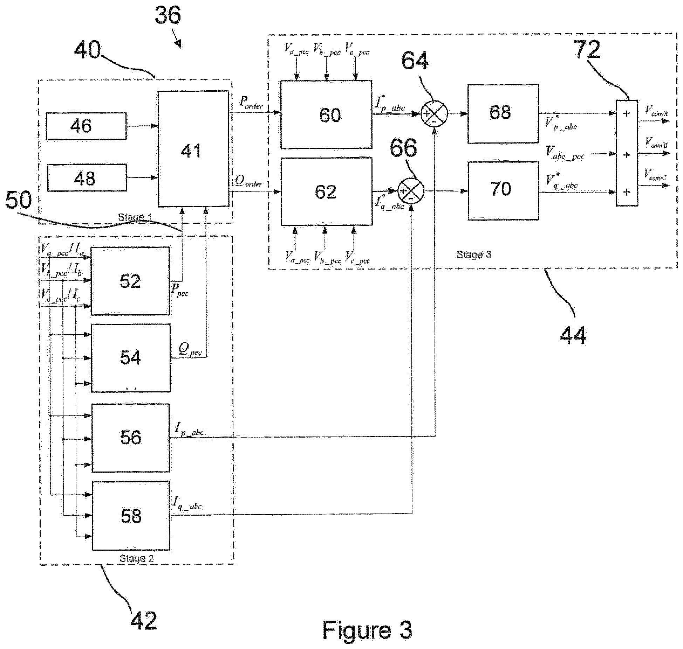

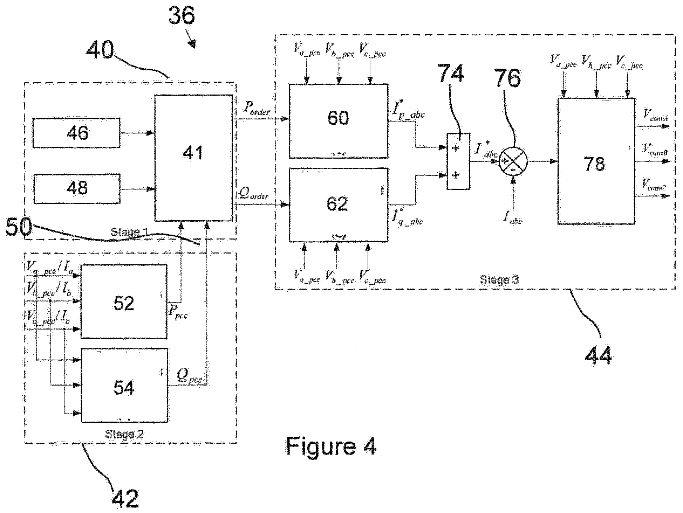

The voltage source converter 10 also includes a controller 36, as shown schematically in Figure 2 and in more detail in Figures 3 and 4. The controller 36 may be part of a control system for controlling the convertor 10. Thus, other parameters, such as measurements and/or orders used to control the operation of the converter 10 may be determined by parts of the control system that are not shown in Figure 2.

The controller 36 comprises a reference phase current determination block 38 which is configured to determine a reference current for each of the phases to satisfy a power demand, as will be described in more detail below with reference to Figure 3 and 4. Reference currents for each phase are calculated independently of one another and also independently for an active power order and a separate reactive power order. This thereby enables modification of at least one phase current drawn from the multi-phase AC electrical network without affecting the other phase currents. This provides the voltage source converter with the capability to readily draw a wide range of combinations of phase currents from the multi-phase AC electrical network.

The reference currents for each phase, $I_{refA}$, $I_{refB}$, $I_{refC}$, determined by block 38 are supplied to respective individual phase control blocks 40a, 40b and 40c. The phase control blocks 40a, 40b, 40c also receives a measurement of the instantaneous voltage, $V_a$, $V_b$, $V_c$, of each grid phase at the PCC 22 and the instantaneous current of each phase, $I_a$, $I_b$, $I_c$. Using these values, each phase control block 40a, 40b, 40c determines a phase control signal for each phase, independently of the phase control signals for each of the other phases. The phase control signals $Vconv_a$, $Vconv_b$, $Vconv_c$ for each phase is supplied to the convertor 10 or, more particularly, to another part of the control system. Thus, a switching control module (not shown) may be used, as will be known to those skilled in the art, to switch the switching elements 32 to generate or synthesize the voltages determined by the phase control signals $Vconv_a$, $Vconv_b$, $Vconv_c$.

Figure 3 shows, schematically, the controller 36 and, in particular, an embodiment of the reference phase current determination block 38. The controller 36 is divided into three sections; a first section 40, a second section 42 and a third section 44. It will be appreciated that the delimitation of the controller into these sections may be for illustrative purposes and may not reflect a practical implementation of the controller 36.

The first section 40 shows generally an outer control loop 41 of the controller, which is configured to determine, amongst other parameters, an active power order, $P_{order}$. The active power order comprises an amount of active or real power that the convertor should pass between the AC and DC electrical networks 14, 16. In the case of the convertor operating as an inverter and thereby converting DC energy to AC energy, the active power order may be the available DC power. The power order, in general, comprises the desired amount of electrical power to be transferred to and/or from the AC network 14 at any point in time and "injected" at the PCC 22.

The first section 40 also determines a reactive power or imaginary power order, $Q_{order}$. The reactive power order comprises an amount of reactive power that the converter should exchange between the phases of the AC electrical networks 14. In a practical system, losses and low strength of the AC network causes variations in convertor output voltage for different active power orders. The reactive power order may be selected to ensure the voltage output of the converter 10 is substantially constant but without contributing to real power flow.

The power order calculation block 41 determines the active power order $P_{order}$ and reactive power order $Q_{order}$ based on at least some of the values determined by demand block 46, measurement block 48 and feedback 50. The demand block 46 provides a DC voltage demand, $V_{dc}$, an AC voltage demands, $V_{ac}$, a DC power demand $P_{dc}$ and a nominal reactive power demand, $Q_{nominal}$. The measurements block 48 provides a measure of the DC voltage and a measure of the DC current. The demand block 46 may calculate or be supplied with the demand values from a different part of the control system. The measurements may be made by the measurement block 48 or received from another part of the control system. The feedback comprises the instantaneous active power $P_{pcc}$ and the instantaneous reactive power $Q_{pcc}$ as determined from measurements of the instantaneous voltage and current at the PCC 22 and as will be described below in relation to the second stage 42.

The controller 36 is particularly concerned with how the active power order and reactive power order is implemented, which is performed by the second and third sections 42, 44.

The second section 42 comprises four calculation blocks 52, 54, 56, 58. Each of the calculation blocks 52, 54, 56, 58 receives a measurement of the instantaneous voltage of each phase, $V_{a\_pcc}$, $V_{b\_pcc}$ and $V_{c\_pcc}$ at the point of common coupling 22 and a measure of the current of each phase, $I_a$, $I_b$ and $I_c$ at the point of common coupling 22. The calculation blocks comprise; an instantaneous active power calculation block 52, an instantaneous reactive power calculation block 54, an instantaneous active current calculation block 56 and an instantaneous reactive current calculation block 58.

The block 52 determines the instantaneous active power $P_{pcc}(t)$ by way of the following equation;

$$P_{pcc}(t) = V_{a\_pcc}(t).I_a(t) + V_{b\_pcc}(t).I_b(t) + V_{c\_pcc}(t).I_c(t)$$

where $V_{x\_pcc}(t)$ comprises the instantaneous voltage measured for one of the phases a, b or c to ground and $I_x(t)$ comprises the current measured for one of the phases a, b or c. The instantaneous voltage measured for one of the phases a, b or c comprises;

$$V_{a\_pcc}(t) = \sqrt{2}.V_a.\sin(\omega t)$$

$$V_{b\_pcc}(t) = \sqrt{2}.V_b.\sin(\omega t - \theta)$$

$$V_{c\_pcc}(t) = \sqrt{2}.V_c.\sin(\omega t + \theta)$$

where Va, Vb and Vc are the rms value of the phase voltages $V_{x\_pcc}$ and, for a three phase network, $\theta=120°$.

The block 54 determines the instantaneous reactive power $Q_{pcc}(t)$ by way of the following equation;

$$Q_{pcc}(t) = \frac{1}{\sqrt{3}}.(V_{bc\_pcc}(t).I_a(t) + V_{ca\_pcc}(t).I_b(t) + V_{ab\_pcc}(t).I_c(t))$$

where $V_{xy\_pcc}(t)$ comprises the difference between the instantaneous voltage measured of phase x and the instantaneous voltage measured of phase y, and wherein x and y represents the different phase combinations of the AC electrical network, which in this embodiment comprises phases a, b and c (leading to xy comprising ab, be, ca).

The block 56 determines instantaneous active current for each phase; $I_{p\_a}(t)$, $I_{p\_b}(t)$, $I_{p\_c}(t)$ in accordance with the following equation;

$$\begin{bmatrix} I_{p\_a}(t) \\ I_{p\_b}(t) \\ I_{p\_c}(t) \end{bmatrix} = \frac{(V_{ab\_pcc}(t) - V_{ca\_pcc}(t)).I_a(t) + (V_{bc\_pcc}(t) - V_{ab\_pcc}(t)).I_b(t) + (V_{ca\_pcc}(t) - V_{bc\_pcc}(t)).I_c(t)}{V_{ab\_pcc}(t)^2 + V_{bc\_pcc}(t)^2 + V_{ca\_pcc}(t)^2} \cdot \begin{bmatrix} \dfrac{V_{ab\_pcc}(t) - V_{ca\_pcc}(t)}{3} \\ \dfrac{V_{bc\_pcc}(t) - V_{ab\_pcc}(t)}{3} \\ \dfrac{V_{ca\_pcc}(t) - V_{bc\_pcc}(t)}{3} \end{bmatrix}$$

The block 56 determines instantaneous reactive current for each phase; $I_{q\_a}(t)$, $I_{q\_b}(t)$, $I_{q\_c}(t)$ in accordance with the following equation;

$$\begin{bmatrix} I_{q\_a}(t) \\ I_{q\_b}(t) \\ I_{q\_c}(t) \end{bmatrix} = \frac{V_{bc\_pcc}(t).I_a(t) + V_{ca\_pcc}(t).I_b(t) + V_{ab\_pcc}(t).I_c(t)}{V_{ab\_pcc}(t)^2 + V_{bc\_pcc}(t)^2 + V_{ca\_pcc}(t)^2} \cdot \begin{bmatrix} V_{bc\_pcc}(t) \\ V_{ca\_pcc}(t) \\ V_{ab\_pcc}(t) \end{bmatrix}$$

The instantaneous active power calculation block 52 and instantaneous reactive power calculation block 54 provide their output as the feedback 50 to the first section 40. The instantaneous active current calculation block 56 and instantaneous reactive current calculation block 58 provide their output to the third section 44.

Thus, the third section 44 receives the active power order $P_{order}$ and reactive power order $Q_{order}$ determined by an outer control loop 41 represented by the first section 40 and the instantaneous active power and instantaneous reactive power determined by the section 42. In addition, the third section 44 also receives the instantaneous voltage measurements for each of the phases $V_{a\_pcc}$, $V_{b\_pcc}$ and $V_{c\_pcc}$ as determined from the PCC 22.

The third section 44 comprises an instantaneous active current reference generator 60 and an instantaneous reactive current reference generator 62.

The current reference generators 60, 62 determine how to implement the active and reactive power orders determined in the first section 40. It will be appreciated that with independent control of each of the phase limbs 28 of the converter 10, there are many permutations of phase current values over the multiple phases that would satisfy the power order. Selection of the desired phase currents to implement the power order is performed by the current reference generators 60, 62. It has been found that particular selection of the phase currents to implement the power order may lead to an efficient convertor and control scheme as well as a convertor that is able to operate reliably despite severe disturbances in the AC network 14. This is advantageous if the AC network 14 is weak. It has been determined that the minimum instantaneous values of phase currents to satisfy the power order would provoke the least voltage variation throughout the AC connected grid in conditions for which voltage stability is important.

The active current reference generator 60 receives the active power order $P_{order}$ and the instantaneous voltage measurements for each of the phases $V_{a\_pcc}$, $V_{b\_pcc}$ and $V_{c\_pcc}$. The active current reference values for each phase are determined to minimise the total current over the total number phases. This is achieved by selecting active current reference values that minimise the reactive power at the PCC 22. In particular, the active current reference values are selected such that the active power order $P_{order}$ is satisfied without any reactive power being provided at the PCC 22. This may be determined by an optimization method, such as Legrange method, which will be known to those skilled in the art. It has been determined that the following equations yield such a set of active current reference values, $I^*_{p\_a}$, $I^*_{p\_b}$, $I^*_{p\_c}$;

$$I^*_{p\_a}(t) = \frac{P_{order}.V_{a\_pcc}(t)}{V_{a\_pcc}(t)^2 + V_{b\_pcc}(t)^2 + V_{c\_pcc}(t)^2}$$

$$I^*_{p\_b}(t) = \frac{P_{order}.V_{b\_pcc}(t)}{V_{a\_pcc}(t)^2 + V_{b\_pcc}(t)^2 + V_{c\_pcc}(t)^2}$$

$$I^*_{p\_c}(t) = \frac{P_{order}.V_{c\_pcc}(t)}{V_{a\_pcc}(t)^2 + V_{b\_pcc}(t)^2 + V_{c\_pcc}(t)^2}$$

It will be appreciated that while in this embodiment the selection of the active current reference values are based on providing a substantially zero reactive power at the PCC 22, in other embodiments, the block is configured to keep the reactive power at the PCC produced by the selection of the active current reference values below a "reactive" threshold. Thus, the above equations are derived based on calculations of reactive power equalling zero, although the controller may instead be configured to use a predetermined reactive threshold and select the active current reference values that provide for reactive power below said reactive threshold. It will be appreciated that in either case, the determination of the active current reference values is based on a determination of the reactive power (either constrained to zero or below a threshold) that would result from use of the active current reference values.

The reactive current reference generator 62 receives the reactive power order $Q_{order}$ and the instantaneous voltage measurements for each of the phases $V_{a\_pcc}$, $V_{b\_pcc}$ and $V_{c\_pcc}$. The reactive current reference values for each phase are determined to minimise the total current over the total number phases while satisfying the reactive power order. This is achieved by selecting reactive current reference values that minimise the active power at the PCC 22 to zero or near zero. In particular, the reactive current reference values are selected such that the reactive power order $Q_{order}$ is satisfied without any active power being provided at the PCC 22. This may be determined by an optimization method, such as Lagrange method, which will be known to those skilled in the art. It has been determined that the following equations yield such a set of reactive current reference values, $I^*_{q\_a}$, $I^*_{q\_b}$, $I^*_{q\_c}$;

$$I^*_{q\_a}(t) = \sqrt{3}.\frac{Q_{order}.V_{bc\_pcc}(t)}{V_{ab\_pcc}(t)^2 + V_{bc\_pcc}(t)^2 + V_{ca\_pcc}(t)^2}$$

$$I^*_{q\_b}(t) = \sqrt{3}.\frac{Q_{order}.V_{ca\_pcc}(t)}{V_{ab\_pcc}(t)^2 + V_{bc\_pcc}(t)^2 + V_{ca\_pcc}(t)^2}$$

$$I^*_{q\_c}(t) = \sqrt{3}.\frac{Q_{order}.V_{ab\_pcc}(t)}{V_{ab\_pcc}(t)^2 + V_{bc\_pcc}(t)^2 + V_{ca\_pcc}(t)^2}$$

It will be appreciated that while in this embodiment the selection of the reactive current reference values are based on providing a substantially zero active power at the PCC 22, in other embodiments, the block may be configured to keep the active power at the PCC produced by the selection of the reactive current reference values below a threshold. Thus, the above equations are derived based on calculations of active power equalling zero, although the controller may instead be configured to use a predetermined active threshold and select the reactive current reference values that provide for active power below said active threshold. It will be appreciated that in either case, the determination of the reactive current reference values is based on a determination of the active power (either constrained to zero or below a threshold) that would result from use of the reactive current reference values.

The selection of these active and reactive current reference values to satisfy the active and reactive power orders is advantageous. It can be demonstrated that, using the active current reference values, only active power is transferred by the convertor 10 to satisfy the active power order. Likewise, it can be demonstrated that, using the reactive current reference values, only reactive power is transferred by the convertor 10 to satisfy the reactive power order. This has been found to improve converter stability.

The active current reference values thus comprises an active current reference value independently determined for each phase a, b, c. The reactive current reference values thus comprises a reactive current reference value independently determined for each phase a, b, c.

Difference block 64 provides a difference between the determined active current reference value and a corresponding instantaneous active current value for the corresponding phase. Difference block 66 provides a difference between the determined reactive current reference value and a corresponding instantaneous reactive current value for the corresponding phase. Difference blocks 64, 66 provide this difference for each phase.

With this method, the VSC converter 10 keeps it synchronization with the AC network 14 in a similar way to the operation of a synchronous machine. In an AC system, the synchronous machines maintain synchronism by transient power transfer and reaction of these currents in the armature, to continuously align the rotor angle. In this controller, the power transfer involves a current, which is unknown and is determined by the interconnecting network instead of using a phase-locked loop (PLL). It is known that reactive power does not contribute to the network power and, in fact, it will adjust only the voltage, which in its turn will provoke an adjustment in the current, keeping the power at the set level. Accordingly, the controller is able to maintain synchronisation with the AC network 14.

The "active" differences from difference block 64 are provided to an active phase instruction block 68, which is shown as a single block but comprises a block for each phase. Likewise, the "reactive" differences from difference block 65 are provided to a reactive phase instruction block 70, which also comprises a block for each phase. These instruction blocks for each phase are embodied as a Proportional-Integral (PI) controller, a Proportional-Resonant (PR) controller or any other appropriate controller. The instruction blocks 68, 70, comprise three active phase instruction blocks and three reactive phase instruction blocks. The blocks 68 and 70 are configured to determine changes in each of the differences over time and generate a convertor reference voltage for each phase and for each of the active and reactive power orders.

A summation block 72 receives the convertor reference voltages for the three phases for the active power order and the convertor reference voltages for the three phases for the reactive power order. The block 72 also receives the instantaneous voltage measurements for each of the phases $V_{a\_pcc}$, $V_{b\_pcc}$ and $V_{c\_pcc}$. The summation block, for each phase, sums the corresponding active converter reference voltage, corresponding reactive converter reference voltage and corresponding instantaneous voltage measurement. The result of this summation provides the phase control signals $Vconv_a$, $Vconv_b$, $Vconv_c$ for each phase, which are used by a further part of the control system. The further part of the control system may control a switching scheme of the switching elements 32 in the limb that corresponds to the phase of the phase control signal, for example.

Figure 4 shows, schematically, the controller 36 and, in particular, a second embodiment of the reference phase current determination block 38. Similar to the first embodiment, the controller 36 is divided into three sections; the first section 40, the second section 42 and the third section 44. It will be appreciated that the delimitation of the controller into these sections may be for illustrative purposes and may not reflect a practical implementation of the controller 36. Like reference numerals have been used for the same parts and therefore only the differences between the second embodiment and the first embodiment will be described.

The first section 40 is identical to the first embodiment. The second section 42, in this embodiment, is substantially identical except that instantaneous active current calculation block 56 and instantaneous reactive current calculation block 58 are absent. Thus, the instantaneous active and reactive current is not passed to the third section 44.

The third section 44 includes the instantaneous active current reference generator 60 and the instantaneous reactive current reference generator 62. The generators 60 and 62 operate as discussed in relation to the first embodiment.

The third section 44 differs in that a summation block 74 sums, for each individual phase, the active current reference value and the reactive current reference value. A difference block 76 then calculates a difference, for each individual phase, between the summed (active and reactive) current reference values and a measure of the corresponding phase's current at the PCC 22.

The third section 44 includes three phase instruction blocks 78, which is shown as a single block but comprises a block for each phase. Each phase instruction block receives the difference corresponding to its phase, from block 76, and a measure of the corresponding phase voltage at the PCC 22. Each phase instruction block 76 then generates the phase control signals $Vconv_{a,b,c}$ for its phase, which is used by a further part of the control system, as discussed above. These instruction blocks 76 may be embodied as a Proportional-Resonant (PR) controller or Discrete time sliding mode control (DSMC), which will be known to those skilled in the art, or by any other appropriate controller.

Another aspect of the controller 36 may be to compensate for harmonic elements. In particular, by measuring or predicting harmonic current injections, the controller 36 is configured to compensate for distortions caused from saturated transformers or from nearby LCC converters. This could be achieved by a harmonic control block (not shown) which applies a modification to the phase currents determined above to include a harmonic component at the same level of amplitude but in phase opposition such as to cancel out any harmonic distortion and improve the quality of the commutating voltage. This may assist LCC converters in recovering with less commutation failures. In this case, the VSC converter 10 can be considered to act as an active filter in addition to exchanging active and reactive power.

It will be appreciated that the embodiments described herein are applicable to any type of voltage source convertor.

## Claims

1. A voltage source converter (10) comprising:

   first and second DC terminals (24, 26) for connection to a DC electrical network (16);

   a plurality of single-phase limbs (28) each comprising first and second limb portions, the limb portions (28) connected to one of the first and second DC terminals (24, 26) and to an AC phase terminal (34) being connectable to a respective phase of a multi-phase AC electrical network (14), each of the first and second limb portions (28) including a phase element (30), each phase element (30) including at least one switching element (32) configured to interconnect a DC voltage and an AC voltage; and
   a controller (36) configured to:

   receive an active power order ($P_{order}$) and a reactive power order ($Q_{order}$) comprising the desired amount of active power and reactive power respectively to be transferred by the converter (10);
   receive a measurement of the instantaneous voltage of each phase of the multi-phase AC electrical network (14);
   determine an active and reactive phase current reference value for each single-phase limb (28) which is independent of the or each other respective phase current reference value and which defines the current each single-phase limb (28) is required to draw from or pass to a corresponding phase of the AC electrical network (14) to effect the active power and reactive power exchanges with the AC electrical network (14) defined by

the active and reactive power orders;

in which the active phase current reference values $I_{P_i}^*(t)$ for each phase, i, of n phases are determined in accordance with the following equation;

$$I_{P_i}^*(t) = \frac{P_{order} \cdot V_{i\_pcc}(t)}{V_{a\_pcc}(t)^2 + \cdots V_{n_{pcc}}(t)^2}$$

wherein $P_{order}$ comprises the active power order, $V_{i\_pcc}(t)$ comprises the instantaneous voltage of the phase for which the active phase current is being calculated and $V_{a\_pcc}(t)^2 + \cdots V_{n_{pcc}}(t)^2$ represents the sum of the squares of each of the instantaneous voltage measurements of the phases of the multi-phase AC electrical network (14), and

in which, for an AC electrical network (14) comprising three phases, a, b, and c, the reactive phase current reference values $I_{q\_a}^*(t), I_{q\_b}^*(t), I_{q\_c}^*(t)$ for each of the phases is given by;

$$I_{q\_a}^*(t) = \sqrt{3} \cdot \frac{Q_{order} \cdot V_{bc\_pcc}(t)}{V_{ab\_pcc}(t)^2 + V_{bc\_pcc}(t)^2 + V_{ca\_pcc}(t)^2}$$

$$I_{q\_b}^*(t) = \sqrt{3} \cdot \frac{Q_{order} \cdot V_{ca\_pcc}(t)}{V_{ab\_pcc}(t)^2 + V_{bc\_pcc}(t)^2 + V_{ca\_pcc}(t)^2}$$

$$I_{q\_c}^*(t) = \sqrt{3} \cdot \frac{Q_{order} \cdot V_{ab\_pcc}(t)}{V_{ab\_pcc}(t)^2 + V_{bc\_pcc}(t)^2 + V_{ca\_pcc}(t)^2}$$

wherein $Q_{order}$ comprises the reactive power order and $V_{ab\_pcc}$, $V_{bc\_pcc}$ and $V_{ca\_pcc}$ comprise instantaneous voltage measurements between phase a and phase b, phase b and phase c and phase c and phase a respectively.

2. A voltage source converter according to claim 1, in which the active phase current reference values are selected such that the instantaneous reactive power ($Q_{pcc(t)}$) determined from the active phase current reference values $I_{P_i}^*(t)$ is substantially zero.

3. A voltage source converter according to any preceding claim, in which the reactive phase current reference values are selected such that the instantaneous active power ($P_{pcc(t)}$) determined from the reactive phase current reference values is substantially zero.

4. A voltage source converter according to any preceding claim, in which the controller (36) is configured to combine the active phase current reference value and the reactive phase current reference value for each single-phase limb (28) to determine a control signal for each said single-phase limb (28).

5. A voltage source converter according to claim 1, in which the controller (36) is configured to;
based on a determination of the harmonic content of an input voltage to the voltage source convertor (10), determine an harmonic current reference value for each single-phase limb (28), the harmonic current reference value determined independently of the or each other harmonic current reference and which has a substantially equivalent amplitude and opposite phase to said determined harmonic content.

**6.** A voltage source converter according to claim 5, in which the controller (36) is configured to combine the active current reference value, the reactive phase current reference value and the harmonic current reference value for each single-phase limb (28) to determine a control signal for said single-phase limb (28).

**7.** A voltage source converter according to any preceding claim, in which the controller (36) is configured to determine an instantaneous active current of each phase of the multi-phase AC electrical network (14), said controller (36) configured to determine a difference between the determined active current reference value and the corresponding instantaneous active current measurements for each phase in the determination of a control signal for said single-phase limb (28).

**8.** A voltage source converter according to any preceding claim, in which the controller (36) is configured to determine an instantaneous reactive current of each phase of the multi-phase AC electrical network (14), said controller (36) configured to determine a difference between the determined reactive current reference value and the corresponding instantaneous reactive current measurements for each phase in the determination of a control signal for said single-phase limb (28).

**9.** A voltage source converter according to claim 1 in which the controller (36) is configured to receive a measurement of the instantaneous voltage of each phase of the multi-phase AC electrical network (14) and use these measurements to calculate the resultant instantaneous reactive power due to the active phase current reference values.

**10.** A voltage source converter according to claim 1 in which the controller (36) is configured to receive a measurement of the instantaneous voltage of each phase of the multi-phase AC electrical network (14) and use these measurements to calculate the resultant instantaneous active power due to the reactive phase current reference values.

**11.** A voltage source converter according to any preceding claim in which the controller (36) is configured to use a method of Lagrange multipliers;

a) to determine the active current reference values that satisfy the active power order and that result in a minimum reactive power; and/or
b) to determine the reactive current reference values that satisfy the reactive power order and that result in a minimum active power.

**12.** A voltage source converter according to any preceding claim, in which the controller (36) is configured to measure the instantaneous voltage of each phase of the multi-phase AC electrical network (14) at a point of common coupling (22).

**13.** An electrical distribution network including the voltage source converter (10) of any one of claims 1 to 12.

**Patentansprüche**

**1.** Ein spannungsgeführter Stromrichter (10), umfassend:
einen ersten und einen zweiten Gleichstromanschluss (24, 26) zum Anschluss an ein elektrisches Gleichstromnetz (16);

eine Vielzahl von einphasigen Zweigabschnitten (28), die jeweils erste und zweite Zweigabschnitte umfassen, wobei die Zweigabschnitte (28) mit einem der ersten und zweiten Gleichstromanschlüsse (24, 26) und mit einem Wechselstromphasenanschluss (34) verbunden sind, der mit einer jeweiligen Phase eines mehrphasigen elektrischen Wechselstromnetzes (14) verbunden werden kann, wobei jeder der ersten und zweiten Zweigabschnitte (28) ein Phasenelement (30) enthält, wobei jedes Phasenelement (30) mindestens ein Schaltelement (32) enthält, das so konfiguriert ist, dass es eine Gleichspannung und eine Wechselspannung miteinander verbindet; und
eine Regelung (36), die konfiguriert ist,
eine Wirkleistungsanforderung ($P_{order}$) und eine Blindleistungsanforderung ($Q_{order}$) zu empfangen, die die gewünschte Menge an Wirkleistung bzw. Blindleistung umfassen, die von dem Umrichter (10) übertragen werden soll;
Empfangen einer Messung der Momentanspannung jeder Phase des mehrphasigen elektrischen Wechselstromnetzes (14);

Bestimmen eines Wirk- und Blindphasenstrom-Referenzwertes für jeden einphasigen Zweig (28), der unabhängig von dem oder jedem anderen jeweiligen Phasenstrom-Referenzwert ist und der den Strom definiert, den jeder einphasige Zweig (28) von einer entsprechenden Phase des elektrischen Wechselstromnetzes (14) abnehmen oder an diese weiterleiten muss, um den durch die Wirk- und Blindleistungsanforderungen definierten Wirkleistungs- und Blindleistungsaustausch mit dem elektrischen Wechselstromnetz (14) zu bewirken; bei dem die Wirkphasenstrom-Referenzwerte $I_{P_i}^*(t)$ für jede Phase i von n Phasen gemäss der folgenden Gleichung bestimmt werden;

$$I_{P_i}^*(t) = \frac{P_{order} \cdot V_{i\_pcc}(t)}{V_{a\_pcc}(t)^2 + \cdots V_{n_{pcc}}(t)^2}$$

wobei $P_{order}$ die Wirkleistungsanforderung umfasst, $V_{i\_pcc}(t)$ die momentane Spannung der Phase umfasst, für die der aktive Phasenstrom berechnet wird, und $V_{a\_pcc}(t)^2 + \cdots V_{n_{pcc}}(t)^2$ die Summe der Quadrate jeder der momentanen Spannungsmessungen der Phasen des elektrischen Mehrphasen-Wechselstromnetzes (14) darstellt, und in dem für ein elektrisches Wechselstromnetz (14) mit den drei Phasen a, b und c die Phasenblindstrom-Referenzwerte $I_{q\_a}^*(t), I_{q\_b}^*(t), I_{q\_c}^*(t)$ für jede der Phasen gegeben sind durch;

$$I_{q\_a}^*(t) = \sqrt{3} \cdot \frac{Q_{order} \cdot V_{bc\_pcc}(t)}{V_{ab\_pcc}(t)^2 + V_{bc\_pcc}(t)^2 + V_{ca\_pcc}(t)^2}$$

$$I_{q\_b}^*(t) = \sqrt{3} \cdot \frac{Q_{order} \cdot V_{ca\_pcc}(t)}{V_{ab\_pcc}(t)^2 + V_{bc\_pcc}(t)^2 + V_{ca\_pcc}(t)^2}$$

$$I_{q\_c}^*(t) = \sqrt{3} \cdot \frac{Q_{order} \cdot V_{ab\_pcc}(t)}{V_{ab\_pcc}(t)^2 + V_{bc\_pcc}(t)^2 + V_{ca\_pcc}(t)^2}$$

wobei $Q_{order}$ die Blindleistungsanforderung umfasst und $V_{ab\_pcc}$, $V_{bc\_pcc}$ und $V_{ca\_pcc}$ die momentanen Spannungsmessungen zwischen Phase a und Phase b, Phase b und Phase c bzw. Phase c und Phase a umfassen.

2. Spannungsgeführter Stromrichter nach Anspruch 1, bei dem die Wirkphasenstrom-Referenzwerte so gewählt sind, dass die aus den Wirkphasenstrom-Referenzwerten $I_{P_i}^*(t)$ ermittelte momentane Blindleistung ($Q_{pcc(t)}$) im Wesentlichen Null ist.

3. Spannungsgeführter Stromrichter nach einem der vorhergehenden Ansprüche, bei dem die Phasenblindstrom-Referenzwerte so gewählt sind, dass die aus den Phasenblindstrom-Referenzwerten ermittelte momentane Wirkleistung ($P_{pcc(t)}$) im Wesentlichen Null ist.

4. Spannungsgeführter Stromrichter nach einem der vorhergehenden Ansprüche, bei dem die Regelung (36) so konfiguriert ist, dass sie den Wirkphasenstrom-Referenzwert und den Blindphasenstrom-Referenzwert für jeden einphasigen Zweig (28) kombiniert, um ein Regelsignal für jeden einphasigen Zweig (28) zu bestimmen.

5. Spannungsgeführter Stromrichter nach Anspruch 1, bei dem die Regelung (36) konfiguriert ist, um;
auf der Grundlage einer Bestimmung des Oberwellengehalts einer Eingangsspannung an den Spannungsquellenwandler (10) einen Oberwellenstrom-Referenzwert für jeden einphasigen Zweig (28) zu bestimmen, wobei der Oberwellenstrom-Referenzwert unabhängig von dem oder jedem anderen Oberwellenstrom-Referenzwert bestimmt wird und eine im Wesentlichen äquivalente Amplitude und entgegengesetzte Phase zu dem bestimmten Oberwellengehalt aufweist.

**6.** Spannungsgeführter Stromrichter nach Anspruch 5, bei dem die Regelung (36) so konfiguriert ist, dass sie den Wirkstrom-Referenzwert, den Blindphasenstrom-Referenzwert und den Oberwellenstrom-Referenzwert für jeden einphasigen Zweig (28) kombiniert, um ein Regelsignal für den einphasigen Zweig (28) zu bestimmen.

**7.** Spannungsgeführter Stromrichter nach einem der vorhergehenden Ansprüche, bei dem die Regelung (36) so konfiguriert ist, dass sie einen momentanen Wirkstrom jeder Phase des mehrphasigen elektrischen Wechselstromnetzes (14) bestimmt, wobei die Regelung (36) so konfiguriert ist, dass sie eine Differenz zwischen dem bestimmten Wirkstrom-Referenzwert und den entsprechenden momentanen Wirkstrommessungen für jede Phase bei der Bestimmung eines Steuersignals für den einphasigen Zweig (28) bestimmt.

**8.** Spannungsgeführter Stromrichter nach einem der vorhergehenden Ansprüche, bei dem die Regelung (36) so konfiguriert ist, dass sie einen momentanen Blindstrom jeder Phase des mehrphasigen elektrischen Wechselstromnetzes (14) bestimmt, wobei die Regelung (36) so konfiguriert ist, dass sie eine Differenz zwischen dem bestimmten Blindstrom-Referenzwert und den entsprechenden momentanen Blindstrom-Messungen für jede Phase bei der Bestimmung eines Steuersignals für den einphasigen Zweig (28) bestimmt.

**9.** Spannungsgeführter Stromrichter nach Anspruch 1, bei dem die Regelung (36) so konfiguriert ist, dass sie eine Messung der momentanen Spannung jeder Phase des mehrphasigen elektrischen Wechselstromnetzes (14) empfängt und diese Messungen verwendet, um die resultierende momentane Blindleistung aufgrund der aktiven Phasenstrom-Referenzwerte zu berechnen.

**10.** Spannungsgeführter Stromrichter nach Anspruch 1, bei dem die Regelung (36) so konfiguriert ist, dass sie eine Messung der momentanen Spannung jeder Phase des mehrphasigen elektrischen Wechselstromnetzes (14) empfängt und diese Messungen verwendet, um die resultierende momentane Wirkleistung aufgrund der Referenzwerte des Phasenblindstroms zu berechnen.

**11.** Spannungsgeführter Stromrichter nach einem der vorhergehenden Ansprüche, bei dem die Regelung (36) so konfiguriert ist, dass sie ein Verfahren der Lagrange-Multiplikatoren verwendet;

    a) um die Wirkstrom-Referenzwerte zu bestimmen, die die Wirkleistungsanforderung erfüllen und zu einer minimalen Blindleistung führen; und/oder
    b) die Blindstrom-Referenzwerte zu ermitteln, die der Blindleistungsanforderung genügen und zu einer minimalen Wirkleistung führen.

**12.** Spannungsgeführter Stromrichter nach einem der vorhergehenden Ansprüche, bei dem die Regelung (36) so konfiguriert ist, dass sie die Momentanspannung jeder Phase des mehrphasigen elektrischen Wechselstromnetzes (14) an einem Punkt der gemeinsamen Kopplung (22) misst.

**13.** Elektrisches Verteilungsnetz mit dem spannungsgeführten Stromrichter (10) nach einem der Ansprüche 1 bis 12.

**Revendications**

**1.** Convertisseur de source de tension (10) comprenant :
des première et deuxième bornes à courant continu (24, 26) pour la connexion à un réseau électrique à courant continu (16) ;

    une pluralité de branches monophasées (28) comprenant chacune des première et seconde parties de branche, les parties de branche (28) étant connectées à l'une des première et seconde bornes à courant continu (24, 26) et à une borne de phase à courant alternatif (34) pouvant être connectée à une phase respective d'un réseau électrique CA multiphasé (14), chacune des première et seconde parties de branche (28) comprenant un élément de phase (30), chaque élément de phase (30) comprenant au moins un élément de commutation (32) configuré pour interconnecter une tension continue et une tension alternative ; et
un contrôleur (36) configuré pour :

    recevoir un ordre de puissance active ($P_{order}$) et un ordre de puissance réactive ($Q_{order}$) comprenant la quantité souhaitée de puissance active et de puissance réactive respectivement à transférer par le convertisseur (10) ;

recevoir une mesure de la tension instantanée de chaque phase du réseau électrique CA multiphasé (14) ;
déterminer une valeur de référence de courant de phase actif et réactif pour chaque branche monophasée (28) qui est indépendante de la ou de chaque autre valeur de référence de courant de phase respective et qui définit le courant que chaque branche monophasée (28) doit prélever ou transmettre à une phase correspondante du réseau électrique CA (14) pour effectuer les échanges de puissance active et de puissance réactive avec le réseau électrique CA (14) définis par les ordres de puissance active et réactive ;

dans lequel les valeurs de référence de courant de phase actif $I^*_{P_i}(t)$ pour chaque phase, i, de n phases sont déterminées conformément à l'équation suivante ;

$$I^*_{P_i}(t) = \frac{P_{order} \cdot V_{i\_pcc}(t)}{V_{a\_pcc}(t)^2 + \cdots V_{n_{pcc}}(t)^2}$$

où $P_{order}$ comprend l'ordre de puissance active, $V_{i\_pcc}(t)$ comprend la tension instantanée de la phase pour laquelle le courant de phase actif est calculé et $V_{a\_pcc}(t)^2 + \cdots V_{n_{pcc}}(t)^2$ représente la somme des carrés de chacune des mesures de tension instantanée des phases du réseau électrique CA multiphasé (14), et dans lequel, pour un réseau électrique CA (14) comprenant trois phases, a, b, et c, les valeurs de référence du courant réactif de phase $I^*_{q\_a}(t), I^*_{q\_b}(t), I^*_{q\_c}(t)$ pour chacune des phases est donné par ;

$$I^*_{q\_a}(t) = \sqrt{3} \cdot \frac{Q_{order} \cdot V_{bc\_pcc}(t)}{V_{ab\_pcc}(t)^2 + V_{bc\_pcc}(t)^2 + V_{ca\_pcc}(t)^2}$$

$$I^*_{q\_b}(t) = \sqrt{3} \cdot \frac{Q_{order} \cdot V_{ca\_pcc}(t)}{V_{ab\_pcc}(t)^2 + V_{bc\_pcc}(t)^2 + V_{ca\_pcc}(t)^2}$$

$$I^*_{q\_c}(t) = \sqrt{3} \cdot \frac{Q_{order} \cdot V_{ab\_pcc}(t)}{V_{ab\_pcc}(t)^2 + V_{bc\_pcc}(t)^2 + V_{ca\_pcc}(t)^2}$$

dans laquelle $Q_{order}$ comprend l'ordre de la puissance réactive et $V_{ab\_pcc}$, $V_{bc\_pcc}$ et $V_{ca\_pcc}$ comprennent les mesures de tension instantanée entre la phase a et la phase b, la phase b et la phase c et la phase c et la phase a respectivement.

2. Convertisseur de source de tension selon la revendication 1, dans lequel les valeurs de référence de courant de phase actif sont sélectionnées de telle sorte que la puissance réactive instantanée ($Q_{pcc(t)}$) déterminée à partir des valeurs de référence de courant de phase actif $I^*_{P_i}(t)$ est sensiblement nulle.

3. Convertisseur de source de tension selon l'une quelconque des revendications précédentes, dans lequel les valeurs de référence de courant de phase réactif sont sélectionnées de telle sorte que la puissance active instantanée ($P_{pcc(t)}$) déterminée à partir des valeurs de référence de courant de phase réactif est sensiblement nulle.

4. Convertisseur de source de tension selon l'une quelconque des revendications précédentes, dans lequel le contrôleur (36) est configuré pour combiner la valeur de référence de courant de phase actif et la valeur de référence de courant de phase réactif pour chaque branche monophasée (28) afin de déterminer un signal de commande pour chaque dite branche monophasée (28).

5. Convertisseur de source de tension selon la revendication 1, dans lequel le contrôleur (36) est configuré pour ;
sur la base d'une détermination du contenu harmonique d'une tension d'entrée au convertisseur de source de tension (10), déterminer une valeur de référence de courant harmonique pour chaque branche monophasée (28), la valeur de référence de courant harmonique déterminée indépendamment de la ou de chaque autre référence de courant harmonique et qui a une amplitude sensiblement équivalente et une phase opposée audit contenu harmonique déterminé.

6. Convertisseur de source de tension selon la revendication 5, dans lequel le contrôleur (36) est configuré pour combiner la valeur de référence de courant actif, la valeur de référence de courant de phase réactif et la valeur de référence de courant harmonique pour chaque branche monophasée (28) pour déterminer un signal de commande pour ladite branche monophasée (28).

7. Convertisseur de source de tension selon l'une quelconque des revendications précédentes, dans lequel le contrôleur (36) est configuré pour déterminer un courant actif instantané de chaque phase du réseau électrique CA multiphasé (14), ledit contrôleur (36) étant configuré pour déterminer une différence entre la valeur de référence de courant actif déterminée et les mesures de courant actif instantané correspondantes pour chaque phase dans la détermination d'un signal de commande pour ledit membre monophasé (28).

8. Convertisseur de source de tension selon l'une quelconque des revendications précédentes, dans lequel le contrôleur (36) est configuré pour déterminer un courant réactif instantané de chaque phase du réseau électrique CA multiphasé (14), ledit contrôleur (36) étant configuré pour déterminer une différence entre la valeur de référence de courant réactif déterminée et les mesures de courant réactif instantané correspondantes pour chaque phase dans la détermination d'un signal de commande pour ledit membre monophasé (28).

9. Convertisseur de source de tension selon la revendication 1, dans lequel le contrôleur (36) est configuré pour recevoir une mesure de la tension instantanée de chaque phase du réseau électrique CA multiphasé (14) et utiliser ces mesures pour calculer la puissance réactive instantanée résultante due aux valeurs de référence de courant de phase active.

10. Convertisseur de source de tension selon la revendication 1, dans lequel le contrôleur (36) est configuré pour recevoir une mesure de la tension instantanée de chaque phase du réseau électrique CA multiphasé (14) et utiliser ces mesures pour calculer la puissance active instantanée résultante due aux valeurs de référence de courant de phase réactif.

11. Convertisseur de source de tension selon l'une quelconque des revendications précédentes, dans lequel le contrôleur (36) est configuré pour utiliser un procédé de multiplicateurs de Lagrange ;

a) pour déterminer les valeurs de référence de courant actif qui satisfont l'ordre de puissance active et qui résultent en une puissance réactive minimale ; et/ou
b) pour déterminer les valeurs de référence de courant réactif qui satisfont l'ordre de puissance réactive et qui résultent en une puissance active minimale.

12. Convertisseur de source de tension selon l'une quelconque des revendications précédentes, dans lequel le contrôleur (36) est configuré pour mesurer la tension instantanée de chaque phase du réseau électrique CA multiphasé (14) en un point de couplage commun (22).

13. Réseau de distribution électrique comprenant le convertisseur de source de tension (10) de l'une quelconque des revendications 1 à 12.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011084910 A1

**Non-patent literature cited in the description**

- Individual-phase decoupled control of three-phase voltage source converter. **FAZELI SEYED MAHDI et al.** IET GENERATION, TRANSMISSION&DISTRIBUTION. IET, vol. 7